# EUROPEAN PATENT SPECIFICATION

(11) **EP 2 995 795 B1**
(45) Date of publication and mention of the grant of the patent: **10.07.2019**
(21) Application number: 14795161.0
(22) Date of filing: 09.05.2014
(51) Int. Cl.: F02B 25/04, F02B 23/02, F02M 21/02

(54) **UNIFLOW SCAVENGING 2-CYCLE ENGINE**
ZWEITAKTMOTOR MIT GLEICHSTROMSPÜLUNG
MOTEUR À DEUX TEMPS À BALAYAGE ÉQUICOURANT

(30) Priority: 10.05.2013 JP 2013100528
(43) Date of publication of application: 16.03.2016
(73) Proprietor: IHI Corporation, Tokyo 135-8710 (JP)
(72) Inventor: KUGE, Takahiro, Tokyo 135-8710 (JP); MASUDA, Yutaka, Tokyo 135-8710 (JP); YAMADA, Takayuki, Tokyo 135-8710 (JP); YAMADA, Takeshi, Tokyo 135-8710 (JP); KAWAI, Masafumi, Tokyo 135-8710 (JP); SHIZUYA, Ken, Tokyo 135-8710 (JP)
(74) Representative: TBK
(86) International application number: PCT/JP2014/062463
(87) International publication number: WO 2014/181864

(56) References cited:
- EP-A1- 2 891 780
- WO-A1-2009/064971
- JP-A- S5 472 306
- JP-A- H06 346 737
- JP-A- H07 208 171
- JP-A- S62 129 518
- JP-A- 2010 209 464
- JP-A- 2012 154 189
- JP-A- 2012 167 666
- JP-B2- 3 908 855
- US-A- 5 870 982
- US-A1- 2002 148 451

## Description

The present invention relates to a uniflow scavenging 2-cycle engine which combusts a premixed gas generated by injecting a fuel gas into an active gas suctioned from a scavenge port.

In a uniflow scavenging 2-cycle engine (a two-stroke engine) which is also used as an engine of a vessel, a scavenge port is provided on an end portion in a stroke direction of a piston of a cylinder, and an exhaust port is provided on the other end portion in the stroke direction of the piston of the cylinder. When an active gas is suctioned into a combustion chamber from the scavenge port in an intake (induction) stroke, the exhaust gases generated by the combustion operation are exhausted by being pushed out of the exhaust port by the suctioned active gas. At this time, a premixed gas is generated by injecting the fuel gas into the suctioned active gas, the combustion operation is achieved by compressing the generated premixed gas, and the piston reciprocates within the cylinder by the explosive pressure generated by the combustion operation.

In such a uniflow scavenging 2-cycle engine, when the mixing between the fuel gas and the active gas is insufficient, the concentration of the fuel gas locally increases, and there are problems such as pre-ignition and emission of unburned gas. Therefore, for example, as disclosed in JP 3908855 B2, a communicating hole is provided on an inner wall of the scavenge port, and a nozzle tube protrudes into the scavenge port from the communicating hole. Moreover, a technique is disclosed for securing the mixing time of the fuel gas and the active gas in the cylinder, by injecting the fuel gas into the scavenge port from the nozzle tube, and by starting the mixing between the active gas and the fuel gas before the active gas is suctioned into the cylinder.

Furthermore, a uniflow scavenging 2-cycle engine according to the preamble of claim 1 is known from US 5 870 982 A. Moreover, WO 2009/064971 A1 discloses a super cooled air and fuel induction system for internal combustion engines.

### [Summary of invention]

### [Technical Problem]

Meanwhile, a configuration is considered in which a plurality of injection ports of the nozzle tube protruding into a scavenge port from a communicating hole and spaced in the stroke direction of the piston are provided to uniformly diffuse the fuel gas into the active gas by suppressing the deviation of the fuel gas. Further, without being limited to such a configuration, a case where a plurality of injection ports for injecting the fuel gas are provided on the outside of the cylinder so as to leave space in the stroke direction of the piston is also assumed.

In this case, since the flow velocity of the active gas leading to the scavenge port differs depending on the position of the scavenge port, the concentration of the fuel gas becomes uneven depending on the positions of the plurality of injection ports. As a result, the concentration of the fuel gas in the combustion chamber are varied, unburned fuel gas may remain by flame-out in a portion of the cylinder where the concentration of the fuel gas is diluted, and abnormal combustion may be caused in a portion where the concentration of the fuel gas is too high.

The present invention has been made in view of such problems, and an object thereof is to provide a uniflow scavenging 2-cycle engine capable of suppressing flame-out or abnormal combustion by equalizing the concentration of the fuel gas that reaches the combustion chamber from the scavenge port.

### [Solution to Problem]

In order to achieve the aforementioned object, according to a first aspect of the invention, there is provided a uniflow scavenging 2-cycle engine which includes a cylinder in which a combustion chamber is formed; a piston which slides within the cylinder; scavenge ports which are provided on one end side in a stroke direction of the piston in the cylinder to suck an active gas into the combustion chamber in accordance with the sliding movement of the piston; and a fuel injection unit which includes injection ports which inject a fuel gas into the active gas to be suctioned into the scavenge ports and are provided on the outside of the cylinder rather than the inner circumferential surface, wherein circulation tubes, through which the fuel gas flows and which are disposed in the stroke direction on a radially outer side of partition walls provided between the scavenge ports, are disposed in the fuel injection unit, the injection ports are open toward the circumferential direction of the cylinder from the circulation tubes, and an amount of the fuel gas injected by the injection ports on the other end side in the stroke direction is larger than an amount of fuel gas injected by the injection ports on one end side in the stroke direction.

In the first aspect, the plurality of the injection ports may be provided at different positions in the stroke direction, and the opening area of the injection port disposed on the other end side in the stroke direction may be larger than the opening area of the injection port disposed on one end side in the stroke direction.

In the first and second aspects, the plurality of the injection ports may be provided at different positions in the stroke direction, and the interval between the injection port and the adjacent injection port disposed on the other end side in the stroke direction may be narrower than the interval between the injection port and the adjacent injection port disposed on one end side of in the stroke direction.

In the first to third aspects, wherein the plurality of the injection ports may be provided at different positions in the stroke direction, the plurality of injection ports are divided into at least two sets of group which include a first injection port group
constituted by one or a plural set of injection ports located on the other end side in the stroke direction, and a second injection port group constituted by one or a plural set of injection ports located on one end side in the stroke direction rather than the first injection port group, and flow passages may be independently formed for each of the second injection port group and the first injection port group.

In the fourth aspect, the pressure of the fuel gas supplied to the first injection port group may be higher than the pressure of the fuel gas supplied to the second injection port group.

In the fourth and fifth aspects, the concentration of the fuel gas supplied to the first injection port group may be higher than the concentration of the fuel gas supplied to the second injection port group.

In the first aspect, the injection port may formed by a long hole extending in the stroke direction, and the width of the opening at the other end side in the stroke direction may be wider than the width of the opening at one end side in the stroke direction.

### [Advantageous Effects of invention]

According to the uniflow scavenging 2-stroke engine of the present invention, it is possible to suppress the flame-out or abnormal combustion by equalizing the concentration of the fuel gas that reaches the combustion chamber from the scavenge port.

### [Brief Description of Drawings]

FIG. 1 is a diagram showing the overall configuration of a uniflow scavenging 2-cycle engine according to a first embodiment of the present invention.
FIG. 2A is a cross-sectional view of a part of a cylinder and a fuel injection unit in the same cross-section as in FIG. 1 showing the fuel injection unit according to the first embodiment of the present invention.
FIG. 2B is a cross-sectional view taken along line II(b)-II(b) of FIG. 2A.
FIG. 2C is a diagram taken along arrow II(c) of FIG. 2B.
FIG. 3A is an enlarged view of a part in the dotted-line of FIG. 2C showing the injection unit according to the first embodiment of the present invention.
FIG. 3B is a diagram taken along arrow III (b) of FIG. 3A in a circulation tube according to the first embodiment of the present invention.
FIG. 3C is a diagram showing a circulation tube of a first modified example according to the first embodiment of the present invention.
FIG. 3D is a diagram showing a circulation tube according to a second modified example according to the first embodiment of the present invention.
FIG. 4 is a diagram showing the flow of a premixed gas in the cylinder.
FIG. 5 is a diagram showing an operation of each control unit according to the first embodiment of the present invention.
FIG. 6A is a cross-sectional view of a position corresponding to FIG. 2A of the cylinder and the fuel injection unit of a second embodiment of the present invention, showing a fuel injection unit according to a second embodiment of the present invention.
FIG. 6B is an enlarged view of a position corresponding to FIG. 3A of the cylinder and the fuel injection unit according to the second embodiment of the present invention.

### [Description of Embodiments]

Hereinafter, preferred embodiments of the present invention will be described in detail with reference to the accompanying drawings. Dimensions, materials, and other specific numerical values shown in these embodiments are merely examples for facilitating understanding of the present invention, and unless specifically indicated otherwise, the present invention is not limited thereto. In addition, in the present specification and drawings, the elements having substantially the same functions and configurations are denoted by the same reference numerals a and repeated description thereof will not be included. Further, the elements which are not directly related to the present invention will not be shown.

### (First embodiment)

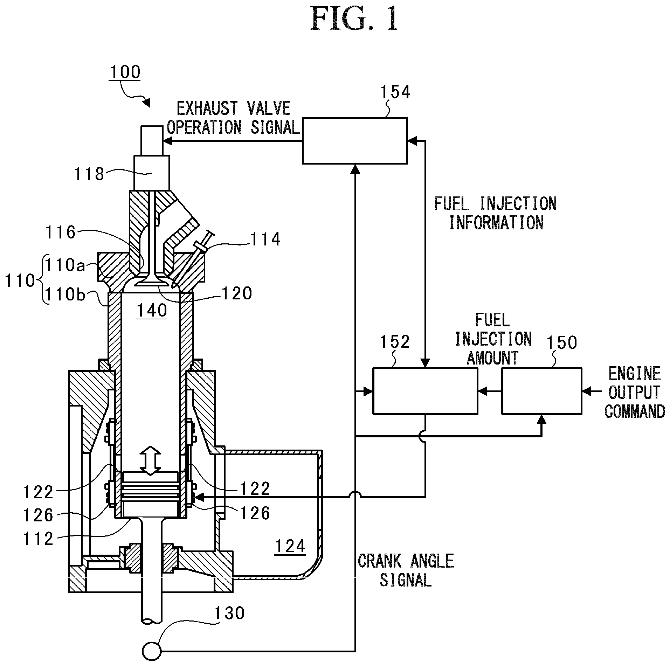

FIG. 1 is a diagram showing an overall configuration of a uniflow scavenging 2-cycle engine 100 according to a first embodiment of the present invention. The uniflow scavenging 2-cycle engine 100 according to the embodiment is, for example, used in a vessel or the like. Specifically, the uniflow scavenging 2-cycle engine 100 is configured to include a cylinder 110 which includes a cylinder head 110a and a cylinder block 110b, a piston 112, a pilot injection valve 114, an exhaust port 116, an exhaust valve driving device 118, an exhaust valve 120, a scavenge port 122, a scavenge chamber 124, a fuel injection unit 126, a rotary encoder 130 and a combustion chamber 140. The uniflow scavenging 2-cycle engine 100 is controlled by a control unit, such as a governor (a speed governor) 150, a fuel injection control unit 152 and an exhaust control unit 154.

In the uniflow scavenging 2-cycle engine 100, a piston 112 connected to a crosshead (not shown) slidably reciprocates inside the cylinder 110 through four consecutive strokes, such as air intake (induction), compression, combustion and exhaust. In such a crosshead type piston 112, it is possible to form a relatively long stroke in the cylinder 110, and the crosshead can be subjected to the lateral pressure acting on the piston 112. Accordingly, it is possible to enhance the output of the uniflow scavenging 2-cycle engine 100. Further, since the cylinder 110 is separated from a crank chamber (not shown) to which the crosshead is fitted, it is possible to prevent staining and deterioration of the crank chamber even when using a low-quality fuel oil.

The pilot injection valve 114 is provided in the cylinder head 110a above the top dead center of the piston 112 to inject an appropriate amount of fuel oil at a desired point in the engine cycle. Such a fuel oil is spontaneously ignited by heat of the combustion chamber 140 surrounded by the cylinder head 110a, a cylinder liner of the cylinder block 110b and the piston 112, and is combusted over a short time to greatly raise the temperature of the combustion chamber 140. Therefore, it is possible to reliably combust the premixed gas containing the fuel gas at a desired timing.

The exhaust port 116 is an opening provided on the top of the cylinder head 110a above the top dead center of the piston 112, and is opened and closed to exhaust the exhaust gas which combustion generates in the cylinder 110. The exhaust valve driving device 118 causes the exhaust valve 120 to slide vertically at a predetermined timing to open and close the exhaust port 116. The exhaust gas is exhausted via the exhaust port 116 to the outside, for example, after being supplied to a turbine side of a turbocharger (not shown).

The scavenge port 122 is a hole which penetrates from an inner circumferential surface (an inner circumferential surface of the cylinder block 110b) on one end side in the stroke direction of the piston 112 in the cylinder 110 to the outer circumferential surface, and a plurality of scavenge ports 122 are provided over the entire periphery of the cylinder 110, each spaced apart from one another. The scavenge port 122 suctions the active gas into the cylinder 110 in accordance with the sliding movement of the piston 112. Such an active gas includes oxygen, an oxidizing agent such as ozone or a mixed gas (e.g., air) thereof. The scavenge chamber 124 is filled with an active gas (e.g., air) put under pressure by a compressor of the turbocharger (not shown), and the active gas is sucked from the scavenge port 122 under a differential pressure between the scavenge chamber 124 and the cylinder 110. Although the pressure of the scavenge chamber 124 can be substantially constant, when the pressure of the scavenge chamber 124 changes, a pressure gauge may be provided in the scavenge port 122 to control other parameters, such as the amount of fuel gas injected, depending on the measured values.

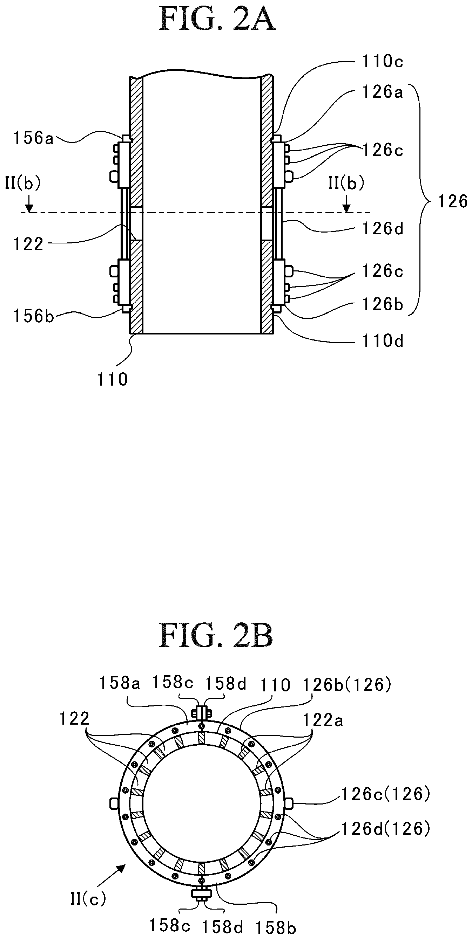

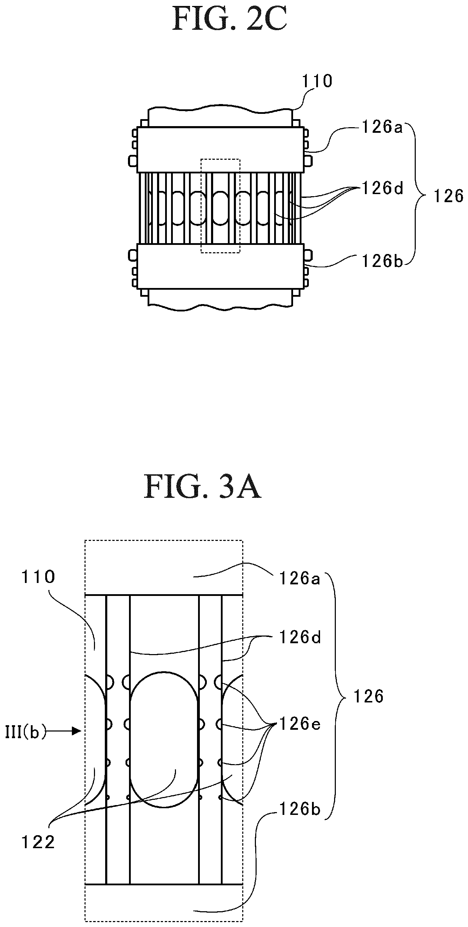

FIGS. 2A to 2C are diagrams for showing the fuel injection unit 126, FIG. 2A illustrates a part of the cylinder 110 and the fuel injection unit 126 in the same cross-section as in FIG. 1, FIG. 2B shows a cross-section taken along line II(b)-II(b) in FIG. 2A, and FIG. 2C shows a diagram taken along arrow II(c) in FIG. 2B. In FIGS. 2A to 2C, in order to facilitate understanding, the cross-sectional structure of the fuel injection unit 126 and the piston 112 are not shown.

As shown in FIG. 2A, the fuel injection unit 126 has mixing tubes 126a and 126b which are formed separately from the cylinder 110. Each of the mixing tubes 126a and 126b is an annular member which surrounds the radially outer side of the cylinder 110 in the circumferential direction. The mixing tube 126a is disposed on the other end side in the stroke direction of the piston 112 (upper side in FIG. 2A) rather than the scavenge port 122, and the mixing tube 126b is disposed on one end side in the stroke direction of the piston 112 (a lower side of FIG. 2A) rather than scavenge port 122.

As shown in FIG. 2A, on the outer circumferential surface of the cylinder 110, a ring 156a is fitted to a groove 110c formed on the upper side of the mixing tube 126a, and the upward movement of the mixing tube 126a is restricted by the ring 156a. Similarly, on the outer circumferential surface of the cylinder 110, a ring 156b is fitted to a groove 110d formed on the lower side of the mixing tube 126b, and the downward movement of the mixing tube 126b is restricted by the ring 156b.

Further, as shown in FIG. 2B, the mixing tube 126b includes two members 158a and 158b which each surround half of the circumference of the cylinder 110, and protrusions 158c and 158d provided at both end portions of the members 158a and 158b are fastened each other by a chain and a nut (a so-called G-coupling). That is, the mixing tube 126b tightens the cylinder 110 from the outer circumferential side, and the vertical movement of the mixing tube 126b in FIG. 2A is also limited by the frictional force of the contact portion between the mixing tube 126b and the cylinder 110. Here, although the means of fixing the mixing tube 126b has been described, the mixing tube 126a is also fastened by the same structure as the mixing tube 126b.

An annularly extending mixing chamber is formed inside each of the mixing tubes 126a and 126b. Each mixing chamber communicates with a fuel piping (not shown) through which the fuel gas obtained by gasifying a liquefied natural gas (LNG) flows, and an active piping (not shown) through which the active gas flows. Moreover, the fuel gas from the fuel piping is mixed with the active gas from the active piping in the mixing chamber to generate a premixed gas. Here the fuel gas is not limited to LNG, and it is possible to use, for example, a gas obtained by gasifying liquefied petroleum gas (LPG), gas oil or heavy oil.

As shown in FIG. 2C, circulation tubes 126d are disposed between the mixing tube 126a and the mixing tube 126b, and both ends of the circulation tubes 126d are connected to each of the mixing tube 126a and the mixing tube 126b. Also, as shown in FIG. 2B, one of the circulation tubes 126d is disposed for each partition wall 122a , at a position (on the radially outer side of the partition wall 122a of the scavenge port 122) which faces the partition walls 122a provided between the adjacent scavenge ports 122, of the outer circumferential surface of the cylinder 110.

The circulation tubes 126d include circulation tubes communicating with the mixing tube 126a and circulation tubes communicating with the mixing tube 126b, and these circulation tubes are alternately disposed in the circumferential direction of the cylinder 110. That is, one of two adjacent circulation tubes 126d communicates with the mixing tube 126a, and the other thereof communicates with the mixing tube 126b. Moreover, the premixed gas containing the fuel gas flowing from the mixing tube 126a or the mixing tube 126b flows through the circulation tubes 126d.

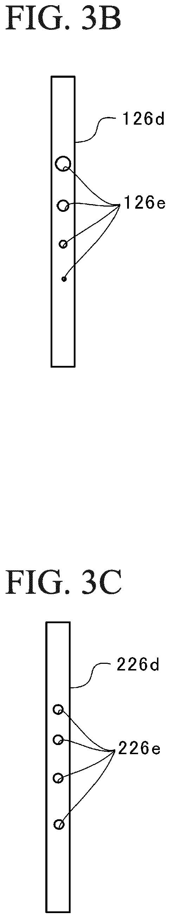

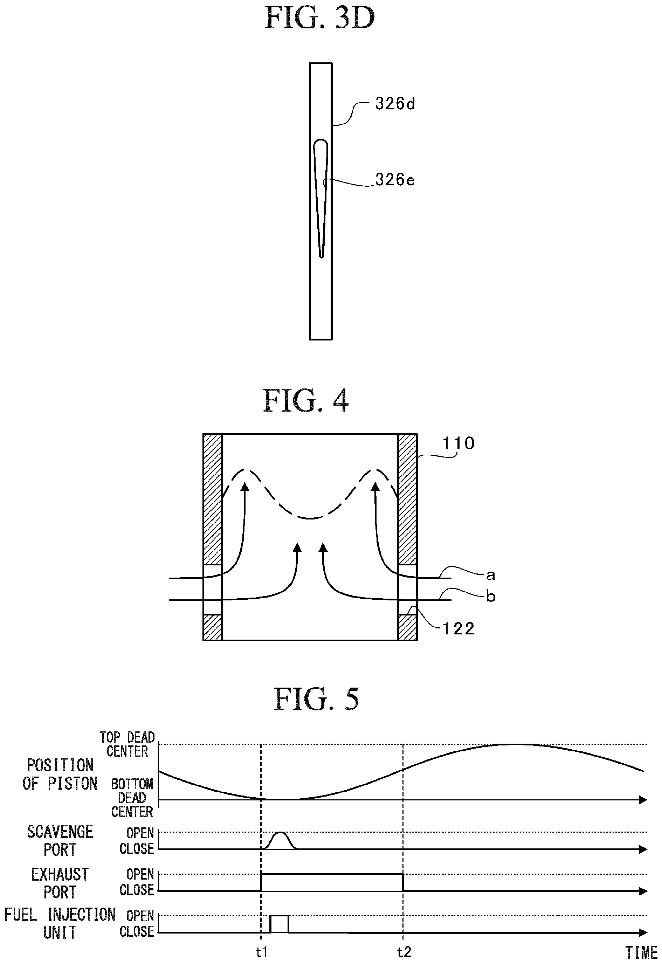

FIGS. 3A to 3D are diagrams for showing an injection unit 126, FIG. 3A shows an enlarged view of a part in the dotted-line of FIG. 2C, FIG. 3B shows a diagram taken along an arrow III(b) in FIG. 3A of the circulation tube 126d, FIG. 3C shows a circulation tube 226d of a first modified example of the present invention, and FIG. 3D shows a circulation tube 326d of a second modified example of the present invention.

As shown in FIG. 3A, the injection ports 126e are formed in the circulation tubes 126d. The injection port 126e includes a hole (opening) through which the inner circumferential surface and the outer circumferential surface of the circulation tube 126d communicate, and is located on the radially outer side (the outer side of the cylinder 110) between the adjacent scavenge ports 122. Further, a plurality of injection ports 126e are formed according to different positions in the stroke direction of the piston 112. Each of the injection ports 126e is open toward the circumferential direction of the cylinder 110 from the circulation tube 126d.

Moreover, when receiving a command from the fuel injection control unit 152 to be described below, a switching valve 126c which opens and closes the flow passages of the fuel gas and the active gas supplied to the injection port 126e is opened (see FIGS. 2A to 2C). Then, the premixed gas is ejected from the only opening in injection port 126e, and the premixed gas is sprayed from the injection port 126e toward the active gas, which flows from the scavenge chamber 124 toward the scavenge port 122. At this time, a vortex is generated in the active gas near the scavenge port 122, and it is possible to promote mixing between the active gas and the premixed gas by the vortex.

FIG. 4 is a diagram for explaining the flow of the premixed gas in the cylinder 110. In FIG. 4, the dotted-line of the flow rate of the gas in the cylinder 110 indicates the relative speed differences of each position along the radial direction, arrows a and b indicate the paths of the flow of the pre-mixed gas, and the front ends of the arrows a and b indicate the positions of the head of the flow of the pre-mixed gas at a predetermined timing.

As shown in FIG. 4, in the scavenge port 122, the premixed gas passing through the other end side in the stroke direction of the piston 112 (the upper side in FIG. 4) flows on the outer diameter side in the cylinder 110 (indicated by the arrow a). Further, in the scavenge port 122, the premixed gas passing through one end side in the stroke direction of the piston 112 (the lower side in FIG. 4) flows on the inner diameter side in the cylinder 110 (indicated by the arrow b).

At this time, although the speed of the gas in the cylinder 110 slightly drops due to the influence of friction with the inner circumferential surface and the viscosity of the gas at a site close to the inner circumferential surface of the cylinder 110, in general, the rising speed is faster on the outer diameter side of the cylinder 110 than on the inner diameter side. This is because the flow velocity of the outer diameter side of the cylinder 110 is accelerated by the influence of a swirl. In addition, as shown in FIG. 1, the exhaust valve 120 is located on the inner diameter side of the cylinder 110 to face the exhaust port 116. Thus, a gap between the exhaust port 116 and the exhaust valve 120 is open to the outer diameter side of the cylinder 110, and due to this, the flow velocity of the outer diameter side of the cylinder 110 is accelerated more than the flow velocity of the inner diameter side.

Accordingly, in FIG. 4, the flow velocity is faster in the premixed gas indicated by the arrow a than in the premixed gas indicated by the arrow b. Therefore, the concentration of the fuel gas is lower in a portion in which the premixed gas indicated by the arrow b reaches the combustion chamber 140 than in a portion in which the premixed gas indicated by the arrow a reaches the combustion chamber 140. That is, the speed difference of the premixed gas becomes a factor of the deviation in the concentration of the premixed gas.

Therefore, in the embodiment of the present invention, as shown in FIG. 3B, the opening area (here, the inner diameter of the opening) of the injection port 126e disposed on the other end side in the stroke direction is larger than that of the injection port 126e disposed on one end side in the stroke direction.

Further, in the first modified example of the present invention shown in FIG. 3C, in the circulation tube 226d, an interval between the injection port 226e and the adjacent injection port 226e disposed on the other end side in the stroke direction is narrower than an interval between the injection port 226e and the adjacent injection port 226e disposed on one end side in the stroke direction. That is, the number of injection ports 226e per unit area of the circulation tube 226d at the other end side in the stroke direction is greater than the number of injection ports 226e per unit area of the circulation tube 226d at one end side in the stroke direction.

Further, in the second modified example of the present invention shown in FIG. 3D, the injection port 326e is formed as a long hole extending in the stroke direction in the circulation tube 326d, and a lateral width of the opening in FIG. 3D on the other end side of the stroke direction is wider than the lateral width of the opening on one end side in the stroke direction.

Even in the case of FIGS. 3B to 3D, a ratio of the opening area occupied per unit area on the outer circumferential surface of the circulation tubes 126d, 226d and 326d is larger on the other end side of the stroke direction than on one end side of the stroke direction. In accordance with the above ratio of the opening area, the injection amount of the premixed gas is bigger on the other end side of the stroke direction than on one end side of the stroke direction. Then, in FIG. 4, the flow rate of the premixed gas indicated by the arrow a is larger than the flow rate of the premixed gas indicated by the arrow b. As a result, in the premixed gas which has reached the combustion chamber 140, the concentration of the fuel gas becomes substantially uniform, and thus, it is possible to suppress flame-out or abnormal combustion.

Further, in the embodiment shown in FIG. 3B, by a simple process of forming injection ports 126e to have different opening areas, it is possible to vary the amount of premixed gas injected and to reduce the machining costs.

Further, in the first modified example shown in FIG. 3C, since the injection amount of the injection ports 226e are varied only by changing the interval therebetween, when forming the injection ports 226e, there is also no need to change tools, and therefore, the machining costs can be reduced.

In the second modified example shown in FIG. 3D, the amount injected through the injection port 326e can be gradually changed depending on the position in the stroke direction, and it is possible to equalize the concentration of the fuel gas.

Returning to FIG. 1, the rotary encoder 130 is provided on a crank mechanism (not shown) to detect an angle signal of the crank (hereinafter, referred to as a crank angle signal).

A governor 150 derives an amount of fuel injected, based on the engine output command value input from the preceding controller, and the engine rotational speed derived from the crank angle signal from the rotary encoder 130, and outputs the derived amount of fuel injected to the fuel injection control unit 152.

The fuel injection control unit 152 controls the switching valve 126c (see FIGS. 2A to 2C), based on information showing an amount of fuel injected input from the governor 150, and the crank angle signal from the rotary encoder 130.

The exhaust control unit 154 outputs an exhaust valve operating signal to the exhaust valve driving device 118, based on a signal relating to the amount of fuel injected from the fuel injection control unit 152, and the crank angle signal from the rotary encoder 130.

Hereinafter, the operation of each control unit in the engine cycle of the uniflow scavenging 2-cycle engine 100 will be described.

FIG. 5 is a diagram showing an operation of each control unit. As shown in FIG. 5, in the exhaust stroke after the combustion stroke, the exhaust port 116 and the scavenge port 122 are in a closed state, and the exhaust gas is filling the combustion chamber 140 (within the cylinder 110).

When the piston 112 moves downward and approaches the bottom dead center with the explosive pressure generated by the combustion action of the combustion chamber 140, the exhaust control unit 154 opens the exhaust valve 120 through the exhaust valve driving device 118, and the scavenge port 122 is opened according to the sliding operation of the piston 112 (t1 shown in FIG. 5). Then, the active gas is suctioned from the scavenge port 122.

Moreover, the fuel injection control unit 152 opens the switching valve 126c, based on the information showing the amount of fuel injected input from the governor 150, and the engine rotational speed derived from the crank angle signal from the rotary encoder 130, thereby injecting the premixed gas into the radially outer side of the cylinder 110 of the scavenge port 122 from the fuel injection unit 126. Thus, the premixed gas is contained in the active gas before being suctioned to the scavenge port 122.

At this time, the amount of the premixed gas (fuel gas) injected through the injection port 126e is larger on the other end side in the stroke direction than on one end side in the stroke direction. The premixed gas rises, while forming a swirl for promoting the mixing between the active gas and the fuel gas contained in the premixed gas, and pushes the exhaust gas in the combustion chamber 140 (within the cylinder 110) outward through the exhaust port 116.

In the compression stroke in which the piston 112 rises toward the top dead center from the bottom dead center, the fuel injection control unit 152 closes the switching valve 126c to stop the injection of the premixed gas into the scavenge port 122 from the fuel injection unit 126. Further, the scavenge port 122 is closed to stop the injection of the premixed gas.

At this time, the exhaust control unit 154 maintains the exhaust valve 120 in the open state, and subsequently, the exhaust gas in the combustion chamber 140 (within the cylinder 110) is discharged from the exhaust port 116 by the rise of the piston 112.

Thereafter, when the piston 112 rises, the exhaust control unit 154 closes the exhaust valve 120 to close the exhaust port 116 (t2 shown in FIG. 5). In the premixed gas that has reached the cylinder head 110a (the combustion chamber 140), the concentration difference of the fuel gas due to the speed difference of the flow velocity is offset by the difference in the injection amount of the premixed gas for each injection port 126e, and the fuel gas concentration becomes substantially uniform. Further, the explosion is caused by the combustion action of the combustion chamber 140.

In this way, by combusting the premixed gas in the combustion chamber 140, as described above, the exhaust stroke, the air induction stroke, the compression stroke and the combustion stroke are repeated.

### (Second embodiment)

Subsequently, a fuel injection unit 426 according to a second embodiment of the present invention will be described. In the second embodiment, since only the fuel injection unit 426 is different from the above-mentioned first embodiment, the description of configurations identical to the first embodiment will not be provided, and only the different configuration of the fuel injection unit 426 will be described.

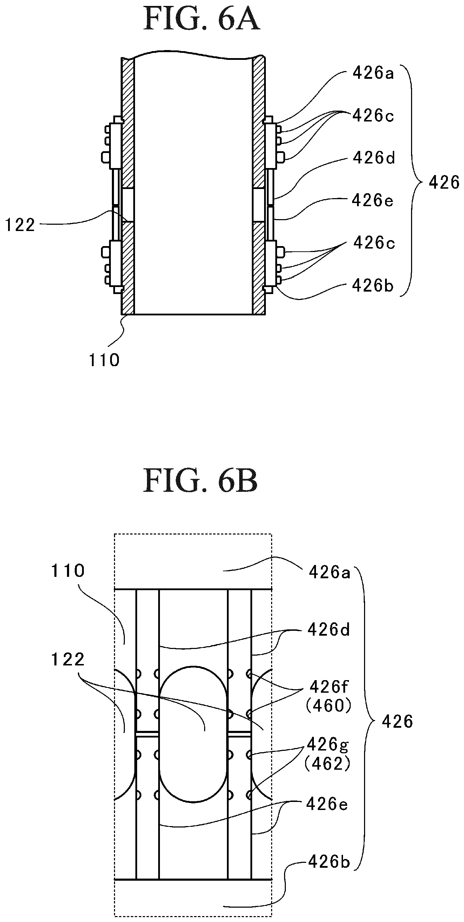

FIGS. 6A and 6B are diagrams for explaining the fuel injection unit 426 of the second embodiment of the present invention, FIG. 6A shows a cross-sectional view of positions corresponding to FIG. 2A of the cylinder 110 and the fuel injection unit 426 in the second embodiment of the present invention, FIG. 6B shows a partially enlarged view of positions corresponding to FIG. 3A of the cylinder 110 and the fuel injection unit 426 in the second embodiment of the present invention.

As shown in FIG. 6A, in the fuel injection unit 426, two circulation tubes 426d and 426e are serially disposed between the mixing tube 426a and the mixing tube 426b. One end of the circulation tubes 426d and 426e are disposed to face each other, and the other end of the circulation tubes 426d and 426e are respectively fixed to the mixing tubes 426a and 426b. Also, similarly to the circulation tube 126d of the above-mentioned first embodiment, one of the circulation tubes 426d and 426e is disposed for each partition wall 122a, at a position which faces the partition walls 122a provided between the adjacent scavenge ports 122, of the outer circumferential surface of the cylinder 110.

The circulation tube 426d communicates with the mixing tube 426a, and the premixed gas containing the fuel gas flowing from the mixing tube 426a is circulated through the circulation tube 426d. Also, the circulation tube 426e communicates with the mixing tube 426b, and the premixed gas containing the fuel gas flowing from the mixing tube 426b is circulated through the circulation tube 426e. In this way, independent flow passages are formed in each of the circulation tube 426d and the circulation tube 426e.

Further, as shown in FIG. 6B, a first injection port 426f is formed in the circulation tube 426d, and a second injection port 426g is formed in the circulation tube 426e. The first injection port 426f and the second injection port 426g are holes (openings) through which the inner circumferential surfaces and the outer circumferential surfaces of the circulation tubes 426d and 426e communicate.

The first injection port 426f and the second injection port 426g are located on the radially outer side (on the outside of the cylinder 110) of the cylinder 110 between the adjacent scavenge ports 122, and are open in the circumferential direction of the cylinder 110 from the circulation tubes 426d and 426e. Also, the first injection ports 426f and the second injection ports 426g are different from each other in their position in the stroke direction of the piston 112.

Here, the first injection port 426f and the second injection port 426g are divided into two sets. The two sets include a set (a first injection port group 460) of two first injection ports 426f located on the other end side in the stroke direction (the upper side in FIG. 6B), and a set (a second injection port group 462) of two second injection ports 426g located on one end side in the stroke direction (the lower side in FIG. 3) rather than the first injection port group 460. That is, the first injection port group 460 and the second injection port group 462 are different from each other in their position in the stroke direction of the piston 112.

The flow passages of the premixed gas are independently formed in each of the first injection port group 460 and the second injection port group 462, like the flow passage of the circulation tube 426d and the flow passage of the circulation tube 426e. Therefore, it is possible to easily vary the amount of the premixed gas injected through the first injection port group 460 and the second injection port group 462, .

Specifically, the pressure of the fuel gas and the active gas supplied to the mixing tube 426a via the switching valve 426c is higher than the pressure of the fuel gas and the active gas supplied to the mixing tube 426b via the switching valve 426c. That is, the pressure of the premixed gas supplied to the first injection port group 460 is higher than the pressure of the premixed gas supplied to the second injection port group 462.

In this way, by setting the pressure of the premixed gas supplied to be higher in the first injection port group 460 than in the second injection port group 462, even when the opening areas of the first injection port 426f and the second injection port 426g and the intervals in the stroke direction are made equal, it is possible to easily vary the amount of premixed gas injected. Therefore, the circulation tubes 426d and 426e can be formed by a common member, and a cost can be reduced. In addition, a difference in the amount of premixed gas injected between the first injection port group 460 and the second injection port group 462 can also be easily changed depending on the driving conditions.

Further, instead of varying the pressure of the premixed gas supplied to the first injection port group 460 and the second injection port group 462, the concentration of the fuel gas supplied to the first injection port group 460 may be set to be higher than the concentration of the fuel gas supplied to the second injection port group 462. Specifically, for example, the ratio of the flow rate to the active gas of the fuel gas allowed to flow into the mixing tube 426a is set to be greater than the ratio of the flow rate of the fuel gas allowed to flow into the mixing tube 426b to the active gas.

In this way, by varying the concentration of the fuel gas in the injected premixed gas between the first injection port group 460 and the second injection port group 462, even when the opening areas of the first injection port 426f and the second injection port 426g and the intervals in the stroke direction are made equal, it is possible to easily vary the amount of fuel gas injected. Also, by mixing the fuel gas allowed to flow into the mixing tube 426b with the active gas in advance, or by mixing a highly stable gas (e.g., water vapor) in addition to the active gas and the fuel gas, the concentration of the fuel gas in the premixed gas injected from the second injection port group 462 may be lowered.

Although the preferred embodiments of the present invention have been described with reference to the accompanying drawings, the present invention is not limited to such embodiments. It is obvious to those skilled in the art that various changes and modifications are conceivable within the scope described in the claims, and those are understood as naturally belonging to the technical scope of the present invention.

For example, in the above-mentioned embodiment, although the description has been given as a case where the injection port 126e, the first injection port 426f and the second injection port 426g are openings provided on the outside of the cylinder 110 rather than the inner circumferential surface of the scavenge port 122, they may be openings provided on the inner circumferential surface of the scavenge port 122.

In the above-mentioned first embodiment, as shown in FIG. 3B, the opening area of the injection port 126e disposed on the other end side in the stroke direction is greater than that of the injection port 126e disposed on one end side in the stroke direction. Further, in the above-mentioned first modified example, as shown in FIG. 3C, the interval between the injection ports 226e adjacent to each other in the stroke direction narrows as it approaches the other end side in the stroke direction. However, both features may be included, without being limited to such a configuration.

In the above-mentioned second embodiment, as shown in FIG. 6B, the injection unit 426 (the first injection port 426f and the second injection port 426g) is divided into the first injection port group 460 and the second injection port group 462, and the flow passages of the premixed gas are independently formed. Further, the pressure of the premixed gas supplied to the first injection port group 460 is set to be higher than the pressure of the premixed gas supplied to the second injection port group 462. In addition, an example in which the concentration of the fuel gas supplied to the first injection port group 460 is set to be higher than the concentration of the fuel gas supplied to the second injection port group 462 has been described. When the injection ports are divided into the first injection port groups 460 and the second injection port groups 462 and the flow passages of the premixed gas are independently formed, one or a plurality of configurations selected from the group of the configuration shown in FIGS. 3B and 3C, the configuration to increase the pressure of the premixed gas supplied to the first injection port group 460 and the configuration to increase the concentration of the fuel gas to the first injection port group 460, may be simultaneously applied.

Furthermore, in the above-mentioned first modified example, the description has been given as a case where the premixed gas of the fuel gas and the active gas is ejected from the injection ports 126e, 226e and 326e toward the active gas flowing toward the scavenge port 122 from the scavenge chamber 124. Further, in the above-mentioned second modified example, the description has been given of a case where the premixed gas of the fuel gas and the active gas is ejected from the first injection port group 460 and the second injection port group 462 toward the active gas flowing toward the scavenge port 122 from the scavenge chamber 124. However, a configuration may be provided in which only the fuel gas is injected from the injection ports 126e, 226e and 326e or the first injection port group 460 and the second injection port group 462 and the fuel gas is mixed with the active gas in the cylinder 110 to generate the premixed gas.

### [Industrial Applicability]

The present invention can be utilized in the uniflow scavenging 2-cycle engine which combusts the premixed gas generated by injecting the fuel gas to the active gas that is suctioned from the scavenge port.

### [Reference Signs List]

100 Uniflow scavenging two-cycle engine
110 Cylinder
112 Piston
122 Scavenge port
126, 426 Fuel injection unit
126e, 226e, 326e Injection unit
426f First injection unit (injection unit)
426g Second injection unit (injection unit)
460 First injection unit group
462 Second injection unit group

## Claims

1. A uniflow scavenging 2-cycle engine (100) comprising:
a cylinder (110) inside which a combustion chamber (140) is formed;
a piston (112) which slides within the cylinder (110);
scavenge ports (122) which are provided on one end side in a stroke direction of the piston (112) in the cylinder (110) to suck an active gas into the combustion chamber (140) in accordance with the sliding movement of the piston (112); and
a fuel injection unit (126, 426) which includes injection ports (126e, 226e, 326e, 426f, 426g) which inject a fuel gas into the active gas to be suctioned into the scavenge ports (122) and are provided on the outside of the cylinder (110) rather than the inner circumferential surface, **characterized in that**
circulation tubes (126d, 226d, 326d, 426d, 426e), through which the fuel gas flows and which are disposed in the stroke direction on a radially outer side of partition walls (122a) provided between the scavenge ports (122), are disposed in the fuel injection unit (126, 426),
the injection ports (126e, 226e, 326e, 426f, 426g) are open toward the circumferential direction of the cylinder from the circulation tubes (126d, 226d, 326d, 426d, 426e), and
an amount of the fuel gas injected by the injection ports (126, 226e, 326e, 426f, 426g) on the other end side in the stroke direction is larger than an amount of the fuel gas injected by the injection ports (126, 226e, 326e, 426f, 426g) on one end side in the stroke direction.

2. The uniflow scavenging 2-cycle engine (100) of claim 1, wherein the plurality of the injection ports (126e) are provided at different positions in the stroke direction, and an opening area of the injection port (126e) disposed on the other end side in the stroke direction is larger than an opening area of the injection port (126e) disposed on one end side in the stroke direction.

3. The uniflow scavenging 2-cycle engine (100) of claim 1, wherein the plurality of the injection ports (226e) are provided at different positions in the stroke direction, and an interval between the injection port (226e) and the adjacent injection port (226e) disposed on the other end side in the stroke direction is narrower than an interval between the injection port (226e) and the adjacent injection port (226e) disposed on one end side of in the stroke direction.

4. The uniflow scavenging 2-cycle engine (100) of claim 2, wherein the plurality of the injection ports (126e) are provided at different positions in the stroke direction, and an interval between the injection port (126e) and the adjacent injection port (126e) disposed on the other end side in the stroke direction is narrower than an interval between the injection port (126e) and the adjacent injection port (126e) disposed on one end side of in the stroke direction.

5. The uniflow scavenging 2-cycle engine (100) of any one of claims 1 to 4, wherein the plurality of the injection ports (426f, 426g) are provided at different positions in the stroke direction, the plurality of injection ports (426f, 426g) are divided into at least two sets of group which include a first injection port group (460) constituted by one or a plural sets of the injection units (426f) located on the other end side in the stroke direction, and a second injection port group (462) constituted by one or a plural set of the injection units (426g) located on one end side in the stroke direction rather than the first injection port group (460), and
flow passages (426d, 426e) of the fuel gas formed in the circulation tube (426d, 426e) are independently formed for each of the second injection port group (462) and the first injection port group (460).

6. The uniflow scavenging 2-cycle engine (100) of claim 5, wherein a pressure of the fuel gas supplied to the first injection port group (460) is higher than a pressure of the fuel gas supplied to the second injection port group (462).

7. The uniflow scavenging 2-cycle engine (100) of claim 5, wherein a concentration of the fuel gas supplied to the first injection port group (460) is higher than a concentration of the fuel gas supplied to the second injection port group (462).

8. The uniflow scavenging 2-cycle engine (100) of claim 6, wherein the concentration of the fuel gas supplied to the first injection port group (460) is higher than the concentration of the fuel gas supplied to the second injection port group (462).

9. The uniflow scavenging 2-cycle engine (100) of claim 1, wherein the injection port (326e) is formed as a long hole extending in the stroke direction, and the width of the opening at the other end side in the stroke direction is wider than the width of the opening at one end side in the stroke direction.

10. The uniflow scavenging 2-cycle engine (100) of claim 1, wherein the fuel injection unit (126, 426) is disposed on an outer circumferential surface of the cylinder (110).

## Patentansprüche

1. Zweitaktmotor mit Gleichstromspülung (100), der Folgendes aufweist:
einen Zylinder (110), in dem eine Brennkammer (140) ausgebildet ist;
einen Kolben (112), der innerhalb des Zylinders (110) gleitet;
Spülöffnungen (122), die an einer Endseite in einer Hubrichtung des Kolbens (112) in dem Zylinder (110) bereitgestellt sind, um ein Aktivgas in die Brennkammer (140) gemäß der Gleitbewegung des Kolbens (112) anzusaugen; und
eine Kraftstoffeinspritzeinheit (126, 426), die Einspritzöffnungen (126e, 226e, 326e, 426f, 426g) hat, die ein Kraftstoffgas in das in die Spülöffnungen (122) anzusaugende Aktivgas einspritzen und die eher auf der Außenseite des Zylinders (110) als der Innenumfangsfläche bereitgestellt sind, **dadurch gekennzeichnet, dass**
Zirkulationsrohre (126d, 226d, 326d, 426d, 426d, 426e), durch die das Kraftstoffgas strömt und die in der Hubrichtung auf einer radial äußeren Seite von Trennwänden (122a) angeordnet sind, die zwischen den Spülöffnungen (122) bereitgestellt sind, in der Kraftstoffeinspritzeinheit (126, 426) angeordnet sind,
die Einspritzöffnungen (126e, 226e, 326e, 426f, 426g) in Richtung zu der Umfangsrichtung des Zylinders von den Zirkulationsrohren (126d, 226d, 326d, 426d, 426d, 426e) offen sind, und
eine Menge des von den Einspritzöffnungen (126, 226e, 326e, 326e, 426f, 426g) auf der anderen Endseite in der Hubrichtung eingespritzten Kraftstoffgases größer ist als eine Menge des von den Einspritzöffnungen (126, 226e, 326e, 426f, 426g) auf einer Endseite in der Hubrichtung eingespritzten Kraftstoffgases.

2. Zweitaktmotor mit Gleichstromspülung (100) nach Anspruch 1, wobei die Vielzahl der Einspritzöffnungen (126e) an verschiedenen Positionen in der Hubrichtung bereitgestellt sind, und eine Öffnungsfläche der Einspritzöffnung (126e), die auf der anderen Endseite in der Hubrichtung angeordnet ist, größer ist als eine Öffnungsfläche der Einspritzöffnung (126e), die auf einer Endseite in der Hubrichtung angeordnet ist.

3. Zweitaktmotor mit Gleichstromspülung (100) nach Anspruch 1, wobei die Vielzahl der Einspritzöffnungen (226e) an verschiedenen Positionen in der Hubrichtung bereitgestellt sind, und ein Abstand zwischen der Einspritzöffnung (226e) und der benachbarten Einspritzöffnung (226e), die auf der anderen Endseite in der Hubrichtung angeordnet ist, enger ist als ein Abstand zwischen der Einspritzöffnung (226e) und der benachbarten Einspritzöffnung (226e), die auf einer Endseite in der Hubrichtung angeordnet ist.

4. Zweitaktmotor mit Gleichstromspülung (100) nach Anspruch 2, wobei die Vielzahl der Einspritzöffnungen (126e) an verschiedenen Positionen in der Hubrichtung bereitgestellt sind, und ein Abstand zwischen der Einspritzöffnung (126e) und der benachbarten Einspritzöffnung (126e), die auf der anderen Endseite in der Hubrichtung angeordnet ist, enger ist als ein Abstand zwischen der Einspritzöffnung (126e) und der benachbarten Einspritzöffnung (126e), die auf einer Endseite in Hubrichtung angeordnet ist.

5. Zweitaktmotor mit Gleichstromspülung (100) nach einem der Ansprüche 1 bis 4, wobei die Vielzahl der Einspritzöffnungen (426f, 426g) an verschiedenen Positionen in der Hubrichtung bereitgestellt sind, die Vielzahl der Einspritzöffnungen (426f, 426g) in mindestens zwei Sätze von Gruppen unterteilt sind, die eine erste Einspritzöffnungsgruppe (460), die aus einem oder einer Vielzahl von Sätzen der Einspritzeinheiten (426f) besteht, die sich auf der anderen Endseite in der Hubrichtung befinden, und eine zweite Einspritzöffnungsgruppe (462) haben, die aus einem oder einer Vielzahl von Sätzen der Einspritzeinheiten (426g) besteht, die sich eher auf einer Endseite in Hubrichtung als die erste Einspritzöffnungsgruppe (460) befinden, und
Strömungsdurchgänge (426d, 426e) des in dem Zirkulationsrohr (426d, 426e) gebildeten Kraftstoffgases unabhängig für jede der zweiten Einspritzöffnungsgruppe (462) und der ersten Einspritzöffnungsgruppe (460) ausgebildet sind.

6. Zweitaktmotor mit Gleichstromspülung (100) nach Anspruch 5, wobei ein Druck des der ersten Einspritzöffnungsgruppe (460) zugeführten Kraftstoffgases höher ist als ein Druck des der zweiten Einspritzöffnungsgruppe (462) zugeführten Kraftstoffgases.

7. Zweitaktmotor mit Gleichstromspülung (100) nach Anspruch 5, wobei eine Konzentration des der ersten Einspritzöffnungsgruppe (460) zugeführten Kraftstoffgases höher ist als eine Konzentration des der zweiten Einspritzöffnungsgruppe (462) zugeführten Kraftstoffgases.

8. Zweitaktmotor mit Gleichstromspülung (100) nach Anspruch 6, wobei die Konzentration des der ersten Einspritzöffnungsgruppe (460) zugeführten Kraftstoffgases höher ist als die Konzentration des der zweiten Einspritzöffnungsgruppe (462) zugeführten Kraftstoffgases.

9. Zweitaktmotor mit Gleichstromspülung (100) nach Anspruch 1, wobei die Einspritzöffnung (326e) als ein Langloch ausgebildet ist, das sich in der Hubrichtung erstreckt, und die Breite der Öffnung an der anderen Endseite in der Hubrichtung breiter ist als die Breite der Öffnung an einer Endseite in der Hubrichtung.

10. Zweitaktmotor mit Gleichstromspülung (100) nach Anspruch 1, wobei die Kraftstoffeinspritzeinheit (126, 426) auf einer Außenumfangsfläche des Zylinders (110) angeordnet ist.

## Revendications

1. Moteur à deux temps à balayage équicourant (100) comprenant :
un cylindre (110) à l'intérieur duquel est formée une chambre de combustion (140) ;
un piston (112) qui coulisse à l'intérieur du cylindre (110) ;
des orifices de balayage (122) qui sont prévus sur un côté d'extrémité dans le sens de la course du piston (112) dans le cylindre (110) pour aspirer un gaz actif dans la chambre de combustion (140) selon le mouvement de coulissement du piston (112) ; et
une unité d'injection de carburant (126, 426) qui comprend des orifices d'injection (126e, 226e, 326e, 426f, 426g) qui injectent un gaz combustible dans le gaz actif destiné à être aspiré dans les orifices de balayage (122) et sont prévus à l'extérieur du cylindre (110) plutôt que de la surface circonférentielle interne, **caractérisé en ce que** :
des tubes de circulation (126d, 226d, 326d, 426d, 426e), à travers lesquels le gaz combustible s'écoule et qui sont disposés dans le sens de la course sur un côté radialement externe des parois de séparation (122a) prévues entre les orifices de balayage (122), sont disposés dans l'unité d'injection de carburant (126, 426),
les orifices d'injection (126e, 226e, 326e, 426f, 426g) sont ouverts vers la direction circonférentielle du cylindre depuis les tubes de circulation (126d, 226d, 326d, 426d, 426e), et
une quantité de gaz combustible injecté par les orifices d'injection (126, 226e, 326e, 426f, 426g) de l'autre côté d'extrémité dans le sens de la course est supérieure à une quantité de gaz combustible injecté par les orifices d'injection (126, 226e, 326e, 426f, 426g) sur le un côté d'extrémité dans le sens de la course.

2. Moteur à deux temps à balayage équicourant (100) selon la revendication 1, dans lequel la pluralité d'orifices d'injection (126e) sont prévus dans différentes positions dans le sens de la course, et une zone d'ouverture de l'orifice d'injection (126e) disposée sur l'autre côté d'extrémité dans le sens de la course est supérieure à une zone d'ouverture de l'orifice d'injection (126e) disposé sur le un côté d'extrémité dans le sens de la course.

3. Moteur à deux temps à balayage équicourant (100) selon la revendication 1, dans lequel la pluralité d'orifices d'injection (226e) sont prévus dans différentes positions dans le sens de la course, et un intervalle entre l'orifice d'injection (226e) et l'orifice d'injection (226e) adjacent disposé sur l'autre côté d'extrémité dans le sens de la course est plus étroit qu'un intervalle entre l'orifice d'injection (226e) et l'orifice d'injection (226e) adjacent disposé sur le un côté d'extrémité dans le sens de la course.

4. Moteur à deux temps à balayage équicourant (100) selon la revendication 2, dans lequel la pluralité d'orifices d'injection (126e) sont prévus dans différentes positions dans le sens de la course, et un intervalle entre l'orifice d'injection (126e) et l'orifice d'injection (126e) adjacent disposé sur l'autre côté d'extrémité dans le sens de la course est plus étroit qu'un intervalle entre l'orifice d'injection (126e) et l'orifice d'injection (126e) adjacent disposé sur le un côté d'extrémité dans le sens de la course.

5. Moteur à deux temps à balayage équicourant (100) selon l'une quelconque des revendications 1 à 4, dans lequel la pluralité d'orifices d'injection (426f, 426g) sont prévus dans différentes positions dans le sens de la course, la pluralité d'orifices d'injection (426f, 426g) sont divisés en au moins deux ensembles de groupes qui comprennent un premier groupe d'orifices d'injection (460) constitué par un ou plusieurs ensembles d'unités d'injection (426f) positionnés sur l'autre côté d'extrémité dans le sens de la course, et un second groupe d'orifices d'injection (462) constitué par un ou plusieurs ensembles d'unités d'injection (426g) positionnés sur un côté d'extrémité dans le sens de la course plutôt que le premier groupe d'orifices d'injection (460), et
des passages d'écoulement (426d, 426e) du gaz combustible formés dans le tube de circulation (426d, 426e) sont formés indépendamment pour chacun parmi le second groupe d'orifices d'injection (462) et le premier groupe d'orifices d'injection (460).

6. Moteur à deux temps à balayage équicourant (100) selon la revendication 5, dans lequel une pression du gaz combustible amené au premier groupe d'orifices d'injection (460) est supérieure à une pression du gaz combustible amené au second groupe d'orifices d'injection (462).

7. Moteur à deux temps à balayage équicourant (100) selon la revendication 5, dans lequel une concentration du gaz combustible amené au premier groupe d'orifices d'injection (460) est supérieure à une concentration du gaz combustible amené au second groupe d'orifices d'injection (462).

8. Moteur à deux temps à balayage équicourant (100) selon la revendication 6, dans lequel la concentration du gaz combustible amené au premier groupe d'orifices d'injection (460) est supérieure à la concentration du gaz combustible amené au second groupe d'orifices d'injection (462).

9. Moteur à deux temps à balayage équicourant (100) selon la revendication 1, dans lequel l'orifice d'injection (326e) est formé sous la forme d'un trou long s'étendant dans le sens de la course, et la largeur de l'ouverture au niveau de l'autre côté d'extrémité dans le sens de la course est plus large que la largeur de l'ouverture au niveau d'un côté d'extrémité dans le sens de la course.

10. Moteur à deux temps à balayage équicourant (100) selon la revendication 1, dans lequel l'unité d'injection de carburant (126, 426) est disposée sur une surface circonférentielle du cylindre (110).
